# EUROPEAN PATENT SPECIFICATION

(11) **EP 4 261 060 B1**
(45) Date of publication and mention of the grant of the patent: **11.02.2026**
(21) Application number: 20967604.8
(22) Date of filing: 30.12.2020
(51) Int. Cl.: B60G 17/0195, B60T 13/16, B60T 13/66, B60T 13/74

(54) **INTEGRATED SUSPENSION AND BRAKING SYSTEM**
INTEGRIERTES AUFHÄNGUNGS- UND BREMSSYSTEM
SYSTÈME DE SUSPENSION ET DE FREINAGE INTÉGRÉ

(43) Date of publication of application: 18.10.2023
(73) Proprietor: Shenzhen Yinwang Intelligent Technologies Co., Ltd., Shenzhen, Guangdong 518129 (CN)
(72) Inventor: CHAI, Benben, Shenzhen, Guangdong 518129 (CN); HU, Fengsheng, Shenzhen, Guangdong 518129 (CN); LIU, Fengyu, Shenzhen, Guangdong 518129 (CN)
(74) Representative: Körber, Martin Hans
(86) International application number: PCT/CN2020/141686
(87) International publication number: WO 2022/141264

(56) References cited:
- CN-A- 108 162 709
- CN-A- 111 055 649
- CN-A- 111 232 054
- CN-A- 111 232 054
- CN-A- 111 267 814
- CN-A- 111 267 814
- CN-B- 108 162 709
- CN-U- 202 115 501
- CN-Y- 201 231 748
- DE-A1- 10 143 888
- GB-A- 1 394 658
- GB-A- 2 003 101
- US-A- 5 040 851

## Description

### TECHNICAL FIELD

This invention relates to the vehicle field, and more specifically, to a suspension and braking integrated system of a vehicle.

### BACKGROUND

With further development of an autonomous driving technology, higher requirements are put forward for vehicle comfort, and more attention is paid to a fully active suspension control technology. The fully active suspension control technology can be used to perform real-time lifting control on a vehicle body, implement active adjustment of a vehicle body posture, and meet strict requirements for the vehicle comfort. To implement real-time adjustment of a vehicle in various complex working conditions, a driving apparatus of a fully active suspension needs to have sufficient reserve power. However, in a process of using the entire vehicle, energy consumption of the suspension is quite low. This causes a waste of the entire suspension driving apparatus. CN 111 232 054 A discloses an integrated system for a vehicle that includes a suspension apparatus and a braking apparatus, both controlled by hydraulic pressure, and an actuator assembly supplying hydraulic pressure to both. A further example of a hydropneumatic suspension system in combination with a hydraulic braking mechanism for a motor vehicle is disclosed by GB 1 394 658 A.

### SUMMARY

This invention provides a suspension and braking integrated system of a vehicle, so as to save space and improve a utilization rate of an actuator assembly. The invention is set out in the appended set of claims.

According to a first aspect, a suspension and braking integrated system of a vehicle is provided. The system includes: a suspension apparatus 110, configured to adjust a posture of the vehicle and controlled by hydraulic pressure; a braking apparatus 120, configured to provide a braking force for a wheel of the vehicle and controlled by hydraulic pressure; and an actuator assembly 130, configured to supply hydraulic pressure to the suspension apparatus 110 and the braking apparatus 120.

According to this invention, the suspension apparatus and the braking apparatus reuse the same actuator assembly, so that a quantity of actuator assemblies of an entire vehicle can be reduced, costs are significantly reduced, and a utilization rate of the actuator assembly is improved. In addition, a quantity of hydraulic pipelines is reduced, an arrangement of a braking system and a suspension system is facilitated, and space of a chassis is saved. At the same time, an integration of the suspension system and the braking system is beneficial to integrated control of the system and utilization of comprehensive dynamic performance of the wheel.

In a possible implementation, the actuator assembly 130 includes a main controller 131, a booster motor 132, and a booster pump assembly 133. The main controller 131 is an integrated controller of the suspension apparatus 110 and the braking apparatus 120, and is configured to: control the booster motor 132 to drive the booster pump assembly 133 to build up pressure for the suspension apparatus 110 and the braking apparatus 120; and control all solenoid valve components in the suspension and braking integrated system.

According to this invention, the system further includes a control valve 136, and the control valve 136 supplies hydraulic pressure to the suspension apparatus 110 through a suspension hydraulic circuit.

According to this invention, the control valve 136 is configured to adjust a flow direction of oil in the suspension hydraulic circuit, to control the suspension apparatus 110 to switch between a first adjustment mode and a second adjustment mode.

The control valve 136 controls the flow direction of the oil in the suspension hydraulic circuit, to control the suspension apparatus 110 to switch between the first adjustment mode and the second adjustment mode. When the suspension apparatus 110 is in the first adjustment mode, the suspension apparatus 110 raises a vehicle body height of the vehicle. When the suspension apparatus 110 is in the second adjustment mode, the suspension apparatus 110 reduces the vehicle body height of the vehicle.

According to this invention, the suspension apparatus 110 includes a damper support assembly 111, and the damper support assembly 111 includes a first hydraulic chamber 16 and a second hydraulic chamber 17 that are connected in series. The control valve 136 is specifically configured to adjust pressure of oil in the first hydraulic chamber 16 to be less than pressure of oil in the second hydraulic chamber 17, to control the suspension apparatus 110 to switch to the first adjustment mode. The control valve 136 is further specifically configured to adjust the pressure in the first hydraulic chamber 16 to be greater than the pressure in the second hydraulic chamber 17, to control the suspension apparatus 110 to switch to the second adjustment mode.

According to this invention, the suspension apparatus 110 is specifically configured to: raise the vehicle body height of the vehicle in the first adjustment mode, and reduce the vehicle body height of the vehicle in the second adjustment mode.

According to this invention, the suspension apparatus 110 includes a damper support assembly 111, and the damper support assembly 111 includes a first hydraulic chamber 16 and a second hydraulic chamber 17; and the control valve 136 is specifically configured to: adjust pressure of oil in the first hydraulic chamber 16 to be less than pressure of oil in the second hydraulic chamber 17, to control the suspension apparatus 110 to switch to the first adjustment mode; and adjust the pressure in the first hydraulic chamber 16 to be greater than the pressure in the second hydraulic chamber 17, to control the suspension apparatus 110 to switch to the second adjustment mode.

In a possible implementation, the control valve 136 is a three-position two-way valve.

In a possible implementation, the system further includes a third hydraulic pipeline 13 and a fourth hydraulic pipeline 14, the actuator assembly 130 supplies hydraulic pressure to the braking apparatus 120 through the third hydraulic pipeline 13, and the actuator assembly 130 supplies hydraulic pressure to the suspension apparatus 110 through the fourth hydraulic pipeline 14.

Optionally, the third hydraulic pipeline 13 and the fourth hydraulic pipeline 14 may be two independent hydraulic pipelines, or may be two branch pipelines of one hydraulic pipeline. This is not limited in this invention.

According to the suspension and braking integrated system provided in embodiments of this invention, bypass solenoid valves are disposed in braking and suspension hydraulic supply circuits to control connection and disconnection of two branches of hydraulic oil, so that a high-pressure oil source may be controlled in real time to flow to different circuits, and the suspension apparatus and the braking apparatus may be integrated.

In a possible implementation, the actuator assembly 130 further includes a flow divider, and the flow divider is configured to control respective flow volumes of oil in the third hydraulic pipeline 13 and the fourth hydraulic pipeline 14 and/or a flow ratio of oil in the two hydraulic pipelines.

In a possible implementation, the system further includes a first bypass valve 134 and a second bypass valve 135, the first bypass valve 134 is disposed on the fourth hydraulic pipeline 14 to control connection and disconnection of the fourth hydraulic pipeline 14, and the second bypass valve 135 is disposed on the third hydraulic pipeline 13 to control connection and disconnection of the third hydraulic pipeline 13.

In a possible implementation, the suspension apparatus 110 further includes a flow valve, the flow valve is disposed on the suspension hydraulic circuit, and the flow valve is configured to perform damping adjustment.

Optionally, the system further includes a first accumulator 116 and a second accumulator 117. In a compression process of the suspension apparatus 110, the second accumulator 117 is configured to quickly adjust the pressure of the oil in the second hydraulic chamber 17. In a restoration process of the suspension apparatus 110, the first accumulator 116 is configured to quickly adjust the pressure of the oil in the first hydraulic chamber 16.

According to the suspension and braking integrated system provided in embodiments of this invention, the flow valve is disposed in the suspension hydraulic circuit to perform active damping adjustment, and a lifting adjustment system and a damping adjustment system of a suspension are integrated, so that the entire active suspension has three adjustment modes: lifting, lowering, and continuous damping. This can improve system flexibility, and improve working efficiency.

Optionally, the braking apparatus 120 further includes an ABS proportional valve 122, the ABS proportional valve 122 is disposed on the third hydraulic pipeline 13, and the ABS proportional valve 122 is configured to perform pressure boost adjustment on the braking apparatus 120.

Optionally, the braking apparatus 120 further includes a pressure reducing valve 123 and a fifth hydraulic pipeline 18, the fifth hydraulic pipeline 15 is connected to a brake disc 121, the pressure reducing valve 123 is disposed on the fifth hydraulic pipeline 18, and the pressure reducing valve 123 is configured to perform pressure reducing adjustment on the braking apparatus 120.

Therefore, according to the suspension and braking integrated system provided in further examples, the ABS proportional valve and the pressure reducing valve are reserved in a braking hydraulic circuit to adjust pressure of an oil cylinder, so that the integrated system can perform braking force adjustment in real time.

According to a further example, an actuator assembly is provided. The actuator assembly is configured to supply hydraulic pressure to a suspension apparatus 110 and a braking apparatus 120, where the suspension apparatus 110 is configured to adjust a posture of a vehicle and is controlled by hydraulic pressure; and the braking apparatus 120 is configured to provide a braking force for a wheel of the vehicle and is controlled by hydraulic pressure.

According to a second aspect, a vehicle is provided. The vehicle includes the system according to the first aspect.

### BRIEF DESCRIPTION OF DRAWINGS

FIG. 1 is a schematic block diagram of a suspension and braking integrated system 100 of a vehicle according to an embodiment of this invention;
FIG. 2 is a schematic diagram of an oil flow path in a lifting process of a suspension system 110 according to an embodiment of this invention;
FIG. 3 is a schematic diagram of an oil flow path in a lowering process of a suspension system 110 according to an embodiment of this invention;
FIG. 4 is a schematic diagram of an oil flow path in a compression process in which a suspension apparatus 110 performs damping adjustment according to an embodiment of this invention;
FIG. 5 is a schematic diagram of an oil flow path in a pressure build-up process of a braking apparatus and a damping adjustment process according to an embodiment of this invention;
FIG. 6 is a schematic diagram of an oil flow path when both lifting of a suspension apparatus and pressure build-up for a braking apparatus are performed according to an embodiment of this invention;
FIG. 7 is a schematic diagram of an arrangement solution of a suspension and braking integrated system of a vehicle according to an embodiment of this invention;
FIG. 8 is a schematic diagram of another arrangement solution of a suspension and braking integrated system of a vehicle according to an embodiment of this invention;
FIG. 9 is a schematic diagram of still another arrangement solution of a suspension and braking integrated system of a vehicle according to an embodiment of this invention; and
FIG. 10 is a flowchart of a suspension and braking integrated control method according to an embodiment of this invention.

### DESCRIPTION OF EMBODIMENTS

The following describes technical solutions of this invention with reference to accompanying drawings. It is clear that the described embodiments are merely some but not all of embodiments of this invention. All other embodiments obtained by a person of ordinary skill in the art based on embodiments of this invention without creative efforts shall fall within the protection scope of this invention, as defined by the appended claims.

A suspension is a general term for all force transmission connection apparatuses between a vehicle frame (or a unitary construction body) and an axle (or wheels) of a vehicle. Functions of the suspension are to transmit a force and a force torque between wheels and the vehicle frame, cushion an impact transmitted to the vehicle frame or the vehicle body by an uneven road surface, and reduce a resulting shock, so as to ensure that the vehicle can travel smoothly.

Currently, a semi-active suspension mainly includes a continuous adjustable damping control (continuous damping control, CDC) damper, a magneto rheological damper (magneto rheological damper, MRD), and an electric controlled air suspension (electric controlled air suspension, ECAS) system. The CDC damper and the MRD change soft and hard support of an option mainly by adjusting damping of a suspension system of a vehicle in real time, so as to improve stability of acceleration, braking, and steering processes of the vehicle, attenuate excitation of a road surface, reduce a deceleration impact of a vehicle body, and improve vehicle comfort. However, both the CDC damper and the MRD attenuate an impact of the road surface passively, and may not adjust a vehicle body posture actively. An air spring suspension system (ECAS) improves stability of the vehicle by adjusting a vehicle body height, and rigidity of an air spring is nonlinear and adjustable. The rigidity varies with a vehicle load. A natural frequency of a no-load or full-load suspension basically remains unchanged. A vehicle carried with the air spring can obtain a lower natural frequency, travel smoothly, and is comfortable for riding. However, when a vehicle height is changed, the air spring responds slowly and an adjustment capability is limited.

With further development of an autonomous driving technology, higher requirements are put forward for vehicle comfort, and more attention is paid to a fully active suspension control technology. The fully active suspension control technology can be used to perform real-time lifting control on a vehicle body, implement active adjustment of a vehicle body posture, and meet strict requirements for the vehicle comfort. To implement real-time adjustment of a vehicle in various complex working conditions, a driving apparatus of a fully active suspension needs to have sufficient reserve power. However, in a process of using the entire vehicle, energy consumption of the suspension is quite low. This causes a waste of the entire suspension driving apparatus. In addition, because of high power of the driving apparatus of the fully active suspension, it is difficult to arrange steering brake components of a chassis. Therefore, at present, the fully active suspension is configured only in a vehicle type with a large wheel base and large space. Horizontal, longitudinal, and vertical dynamic modules of a current vehicle are controlled in coordination with an actuator by using vertical communication of the chassis. There is a delay of a communication signal and a coordination problem of the actuator, and dynamic performance of the vehicle cannot be fully utilized.

At present, there are two solutions for the fully active suspension: an active body technology and an electromechanical rotary damper (electromechanical rotary damper, eROT).

In the active body control technology, a high-speed rotor pump is used to implement lifting control of the vehicle body, and an original spring is retained to maintain a basic height of the vehicle body under a static load. Maximum instantaneous power of a motor reaches 13 kW and average power is 150 W. The entire system increases a weight of the entire vehicle by 50 kg. Four wheels are separately driven by four motor hydraulic modules. Control and lifting of the vehicle body posture can be implemented, response is swift, and there are various extensible functions. However, in this solution, a structure of the entire system is complex, and a mechanical arrangement of the active suspension occupies most space of the vehicle chassis. This increases the wheel base of the vehicle, and puts forward a higher requirement for an arrangement of a braking system and a steering system of the vehicle. At the same time, each angle assembly of the suspension is provided with a high-power motor that adjusts the vehicle body height only in a specific working condition, a working time of the motor is limited, and a utilization rate is low. Consequently, system costs may be increased.

In an eROT solution, each of four angles of the vehicle is provided with a motor with a peak of 2 kW. The motor is provided with energy by a 48 V main electrical power system, and is connected to a driving wheel through a belt. The motor rotates to drive a lifting arm at the bottom of the suspension to adjust the vehicle height. Torque response of a lifting end of the motor is 4500 Nm/s, a system weight is 65 kg, a deceleration ratio is 1:189, and a lifting force of a wheel edge is 5 KN. In this solution, the motor also needs to be separately arranged, and a lifting operation is implemented by using a belt drive mechanism. Consequently, space required for a horizontal arrangement of the entire vehicle is large, and the utilization rate of the motor is low. In addition, the eROT suspension system needs to work with an air spring to implement shock absorption and damping control. This leads to a complex structure of the system, a drive ratio of a mechanical mechanism is quite large, and design is difficult.

Based on the foregoing problem, embodiments of this invention provide a suspension and braking integrated system, so that a suspension apparatus and a braking apparatus reuse a same braking apparatus, to reduce quantities of actuator assemblies and hydraulic pipelines.

It should be noted that this invention is described by using only an example in which the actuator assembly controls the suspension apparatus and the braking apparatus by using hydraulic pressure. However, embodiments of this invention are not limited thereto. Modifications are possible within the scope of the invention, as defined in the claims.

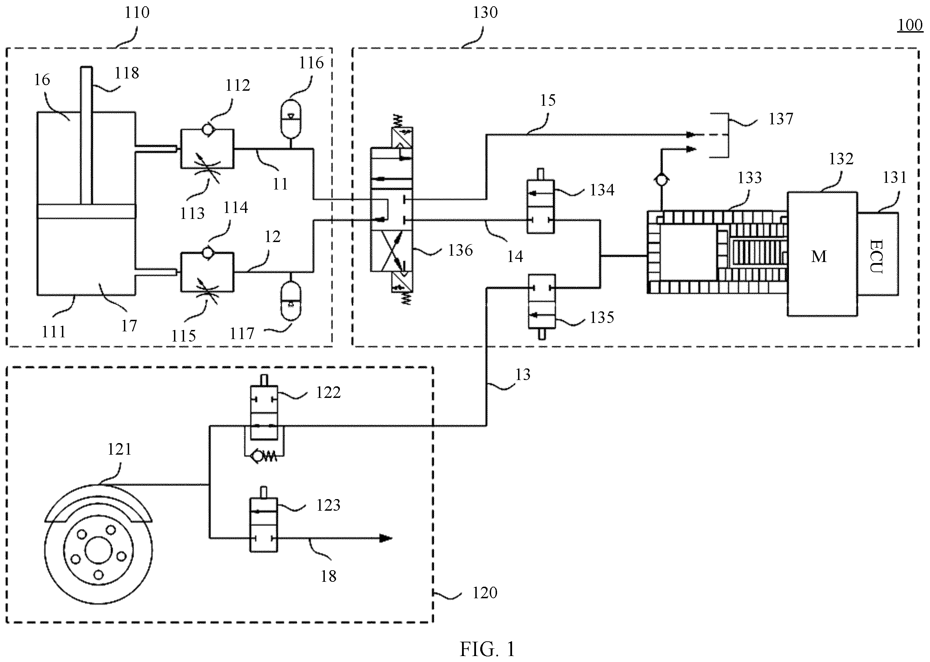

FIG. 1 is a schematic block diagram of a suspension and braking integrated system 100 of a vehicle according to an embodiment of this application. As shown in FIG. 1, the suspension and braking integrated system 100 includes: a suspension apparatus 110, a braking apparatus 120, and an actuator assembly 130. The suspension apparatus 110 is configured to adjust a posture of the vehicle, and the braking apparatus 120 is configured to provide a braking force for a wheel of the vehicle, where both the suspension apparatus 110 and the braking apparatus 120 are controlled by hydraulic pressure, and the actuator assembly 130 is configured to supply hydraulic pressure to the suspension apparatus 110 and the braking apparatus 120. That is, in the suspension and braking integrated system 100 provided in embodiments of this application, the suspension apparatus 110 and the braking apparatus 120 reuse the same actuator assembly 130, and the actuator assembly 130 may supply hydraulic pressure to the suspension apparatus 110 and the braking apparatus 120 at the same time or separately, to perform hydraulic control.

Therefore, according to the suspension and braking integrated system provided in embodiments of this application, the suspension apparatus and the braking apparatus reuse the same actuator assembly, so that a quantity of actuator assemblies of an entire vehicle can be reduced, costs are significantly reduced, and a utilization rate of the actuator assembly is improved. In addition, a quantity of hydraulic pipelines is reduced, an arrangement of a braking system and a suspension system is facilitated, and space of a chassis is saved. In addition, an integration of the suspension system and the braking system is beneficial to integrated control of the system and utilization of comprehensive dynamic performance of the wheel.

Optionally, the actuator assembly 130 includes a main controller 131, a booster motor 132, and a booster pump assembly 133. The main controller 131 is an integrated controller of the suspension apparatus 110 and the braking apparatus 120, and is configured to: control the booster motor 132 to drive the booster pump assembly 133 to build up pressure for the suspension apparatus 110 and the braking apparatus 120; and control all solenoid valve components in the suspension and braking integrated system.

Optionally, the suspension apparatus 110 includes a control valve 136, and the control valve 136 may be, for example, a three-position two-way valve. The control valve 136 supplies hydraulic pressure to the suspension apparatus 110 through a suspension hydraulic circuit, and controls a flow direction of oil in the suspension hydraulic circuit, to control the suspension apparatus 110 to adjust the vehicle to different postures. For example, the control valve 136 controls the flow direction of the oil in the suspension hydraulic circuit, to control the suspension apparatus 110 to switch between a first adjustment mode and a second adjustment mode. When the suspension apparatus 110 is in the first adjustment mode, the suspension apparatus 110 may raise a vehicle body height of the vehicle. When the suspension apparatus 110 is in the second adjustment mode, the suspension apparatus 110 may reduce the vehicle body height of the vehicle.

Optionally, the suspension apparatus 110 includes a damper support assembly 111, and the damper support assembly 111 includes a first hydraulic chamber 16 and a second hydraulic chamber 17 that are connected in series. The control valve 136 is specifically configured to adjust pressure of oil in the first hydraulic chamber 16 to be less than pressure of oil in the second hydraulic chamber 17, to control the suspension apparatus 110 to switch to the first adjustment mode. The control valve 136 is further specifically configured to adjust the pressure in the first hydraulic chamber 16 to be greater than the pressure in the second hydraulic chamber 17, to control the suspension apparatus 110 to switch to the second adjustment mode.

For example, the first hydraulic chamber 16 and the second hydraulic chamber 17 are vertically connected in series, the first hydraulic chamber 16 is located on the top of the second hydraulic chamber 17. A piston push rod 118 is disposed in the first hydraulic chamber 16, and the suspension apparatus 110 may adjust the posture of the vehicle through the piston push rod 118. The suspension hydraulic circuit includes a first hydraulic pipeline 11 and a second hydraulic pipeline 12, the first hydraulic pipeline 11 is connected to the first hydraulic chamber 16, and the second hydraulic pipeline 12 is connected to the second hydraulic chamber 17. The control valve 136 controls the flow direction of the oil in the suspension hydraulic circuit, to adjust the pressure of the oil in the first hydraulic chamber 16 and the pressure of the oil in the second hydraulic chamber 17 in the damper support assembly 111. When the pressure in the first hydraulic chamber 16 is less than the pressure in the second hydraulic chamber 17, the suspension apparatus 110 switches to the first adjustment mode. When the pressure in the first hydraulic chamber 16 is greater than the pressure in the second hydraulic chamber 17, the suspension apparatus 110 switches to the second adjustment mode. Specifically, an example is as follows: The actuator assembly 130 supplies hydraulic pressure to the suspension apparatus 110, the control valve 136 controls a flow direction of oil in the first hydraulic pipeline 11 to be from the first hydraulic chamber 16 to the first hydraulic pipeline 11, and the control valve 136 controls a flow direction of the oil in the second hydraulic pipeline 12 to be from the second hydraulic pipeline 12 to the second hydraulic chamber 17. In this case, the pressure in the first hydraulic chamber 16 decreases, and the pressure in the second hydraulic chamber 17 increases. When the pressure of the oil in the first hydraulic chamber 16 is less than the pressure of the oil in the second hydraulic chamber 17, the piston push rod 118 rises under an effect of a pressure difference, so as to raise the height of the vehicle. In this case, the suspension apparatus 110 is in the first adjustment mode. Specifically, another example is as follows: The actuator assembly 130 supplies hydraulic pressure to the suspension apparatus 110, the control valve 136 controls a flow direction of oil in the first hydraulic pipeline 11 to be from the first hydraulic pipeline 11 to the first hydraulic chamber 16, and the control valve 136 controls a flow direction of oil in the second hydraulic pipeline 12 to be from the second hydraulic chamber 17 to the second hydraulic pipeline 12. In this case, the pressure in the first hydraulic chamber 16 increases, and the pressure in the second hydraulic chamber 17 decreases. When the pressure of the oil in the first hydraulic chamber 16 is greater than the pressure of the oil in the second hydraulic chamber 17, the piston push rod 118 drops under an effect of a pressure difference, so as to reduce the height of the vehicle. In this case, the suspension apparatus 110 is in the second adjustment mode.

Optionally, the suspension and braking integrated system 100 further includes a third hydraulic pipeline 13 and a fourth hydraulic pipeline 14. The actuator assembly 130 supplies hydraulic pressure to the braking apparatus 120 through the third hydraulic pipeline 13, and the actuator assembly 130 supplies hydraulic pressure to the suspension apparatus 110 through the fourth hydraulic pipeline 14.

Optionally, a first bypass valve 134 is disposed on the fourth hydraulic pipeline 14, and the first bypass valve 134 is configured to control connection and disconnection of the fourth hydraulic pipeline 14. When the entire vehicle body height of the vehicle needs to be adjusted, the main controller 131 controls the first bypass valve 134 to switch on; otherwise, the main controller 131 controls the first bypass valve 134 to switch off. A second bypass valve 135 is disposed on the third hydraulic pipeline 13, and the second bypass valve 135 is configured to control connection and disconnection of the third hydraulic pipeline 13. When the vehicle needs to be braked, the main controller 131 controls the second bypass valve 135 to switch on; otherwise, the main controller 131 controls the second bypass valve 135 to switch off.

Therefore, according to the suspension and braking integrated system provided in embodiments of this invention, bypass solenoid valves are disposed in braking and suspension hydraulic supply circuits to control connection and disconnection of two branches of hydraulic oil, so that a high-pressure oil source may be controlled in real time to flow to different circuits, and the suspension apparatus and the braking apparatus may be integrated.

It should be noted that the third hydraulic pipeline 13 and the fourth hydraulic pipeline 14 may be two independent hydraulic pipelines, or may be two branch pipelines of one hydraulic pipe. This is not limited in this invention.

Optionally, the actuator assembly 130 further includes a flow divider (not shown in the figure), and the flow divider is configured to control respective flow volumes of oil in the third hydraulic pipeline 13 and the fourth hydraulic pipeline 14 and/or a flow ratio of oil in the two hydraulic pipelines.

Therefore, in the suspension and braking integrated system provided in embodiments of this invention, one actuator assembly supplies hydraulic pressure of a same flow volume to the suspension apparatus and the braking apparatus through a flow divider, or supplies hydraulic pressure to the suspension apparatus and the braking apparatus in proportion, so that the actuator assembly may supply hydraulic pressure to the suspension apparatus and the braking apparatus at the same time.

Optionally, the suspension apparatus 110 further includes a flow valve, the flow valve is disposed on the suspension hydraulic circuit to perform damping adjustment. Therefore, in some cases, for example, in a traveling process of a vehicle, when a vehicle body bumps due to an uneven road surface or due to an inertia effect, damping control is performed on the vehicle, so as to attenuate an impact of the road surface.

For example, the flow valve includes a first flow valve 113 and a second flow valve 115, the first flow valve 113 is disposed on the first hydraulic pipeline 11, and the second flow valve 115 is disposed on the second hydraulic pipeline 12. The suspension apparatus 110 further includes a first one-way valve 112 and a second one-way valve 114. The first one-way valve 112 is disposed on the first hydraulic pipeline 11, the first one-way valve 112 is connected in parallel to the first flow valve 113, and the first one-way valve 112 is configured to: allow oil to flow in a direction from the first hydraulic pipeline 11 to the first hydraulic chamber 16, and at the same time prevent the oil from flowing in an opposite direction. The second one-way valve 114 is disposed on the second hydraulic pipeline 12, the second one-way valve 114 is connected in parallel to the second flow valve 115, and the second one-way valve 114 is configured to: allow the oil to flow in a direction from the second hydraulic pipeline 12 to the second hydraulic chamber 17, and at the same time prevent the oil from flowing in an opposite direction. Optionally, the suspension apparatus 110 further includes a first accumulator 116 and a second accumulator 117.

Specifically, the second flow valve 115 controls a flow volume of oil flowing from the second hydraulic chamber 17 to the second hydraulic pipeline 12, so as to perform damping adjustment in a compression process of the suspension apparatus 110; and the first flow valve 113 controls a flow volume of oil flowing from the first hydraulic chamber 16 to the first hydraulic pipeline 11, so as to perform damping adjustment in a restoration process of the suspension apparatus 110. It should be noted that, the compression process of the suspension apparatus 111 refers to a process in which the piston push rod 118 in the damper support assembly 111 drops due to shock of the vehicle body; and the restoration process of the suspension apparatus 111 refers to a process in which the piston push rod 118 in the damper support assembly 111 rises due to shock of the vehicle body, or a process in which the piston push rod 118 is restored to an original position after the compression process of the suspension apparatus 110.

Optionally, in the compression process of the suspension apparatus 110, the second accumulator 117 is configured to quickly adjust the pressure of the oil in the second hydraulic chamber 17. In the restoration process of the suspension apparatus 110, the first accumulator 116 is configured to quickly adjust the pressure of the oil in the first hydraulic chamber 16.

Therefore, according to the suspension and braking integrated system provided in embodiments of this invention, the flow valve is disposed in the suspension hydraulic circuit to perform active damping adjustment, and a lifting adjustment system and a damping adjustment system of a suspension are integrated, so that the entire active suspension has three adjustment modes: lifting, lowering, and continuous damping. This can improve system flexibility, and improve working efficiency.

Optionally, the braking apparatus 120 further includes an ABS proportional valve 122, the ABS proportional valve 122 is disposed on the third hydraulic pipeline 13, and the ABS proportional valve 122 is configured to perform pressure boost adjustment on the braking apparatus 120.

Optionally, the braking apparatus 120 further includes a pressure reducing valve 123 and a fifth hydraulic pipeline 18, the fifth hydraulic pipeline 15 is connected to a brake disc 121, the pressure reducing valve 123 is disposed on the fifth hydraulic pipeline 18, and the pressure reducing valve 123 is configured to perform pressure reducing adjustment on the braking apparatus 120.

For example, in a pressure build-up process of the braking apparatus 120, namely, a process of applying brakes, the main controller 131 controls the ABS proportional valve 122 to switch on and the pressure reducing valve 123 to switch off; in a pressure maintaining process of the braking apparatus 120, namely, a process of maintaining brakes, the main controller 131 controls the ABS proportional valve 122 and the pressure reducing valve 123 to switch off; and in a pressure reducing process of the braking apparatus 120, namely, a process of closing brakes, the main controller 131 controls the ABS proportional valve 122 to switch off and the pressure reducing valve 123 to switch on.

Therefore, according to the suspension and braking integrated system provided in embodiments of this invention, the ABS proportional valve and the pressure reducing valve are reserved in a braking hydraulic circuit to adjust pressure of an oil cylinder, so that the integrated system can perform braking force adjustment in real time.

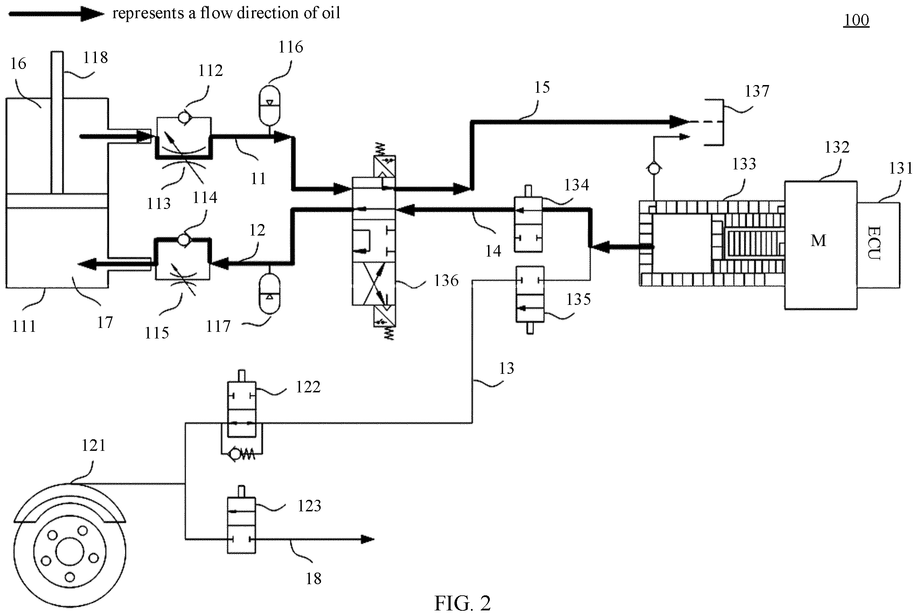

FIG. 2 is a schematic diagram of an oil flow path in a lifting process (a first adjustment mode) of a suspension system 110 according to an embodiment of this invention. As shown in FIG. 2, a main controller 131 determines, based on a monitoring result or a system requirement, to switch a suspension apparatus 110 to the first adjustment mode. Specifically, the main controller 131 controls a booster motor 132 to drive a booster pump assembly 133 to build up pressure, and at the same time controls a first bypass valve 134 to switch on and a second bypass valve 135 to switch off. High-pressure oil flows out from an outlet of the booster pump assembly 133 and flows to a control valve 136 through a fourth hydraulic pipeline 14. The main controller 131 controls an outlet and an inlet of the control valve 136, so that the high-pressure oil flows from the control valve 136 to a second hydraulic chamber 17 of a suspension support assembly 111 through a second hydraulic pipeline 12. Oil in a first hydraulic chamber 16 flows to the control valve 136 through a first hydraulic pipeline 11, and flows to an oil storage cylinder 137 through a fifth hydraulic pipeline 15. In this case, pressure in the second hydraulic chamber 17 increases, pressure in the first hydraulic chamber 16 decreases, and a piston push rod 118 rises under an effect of a pressure difference.

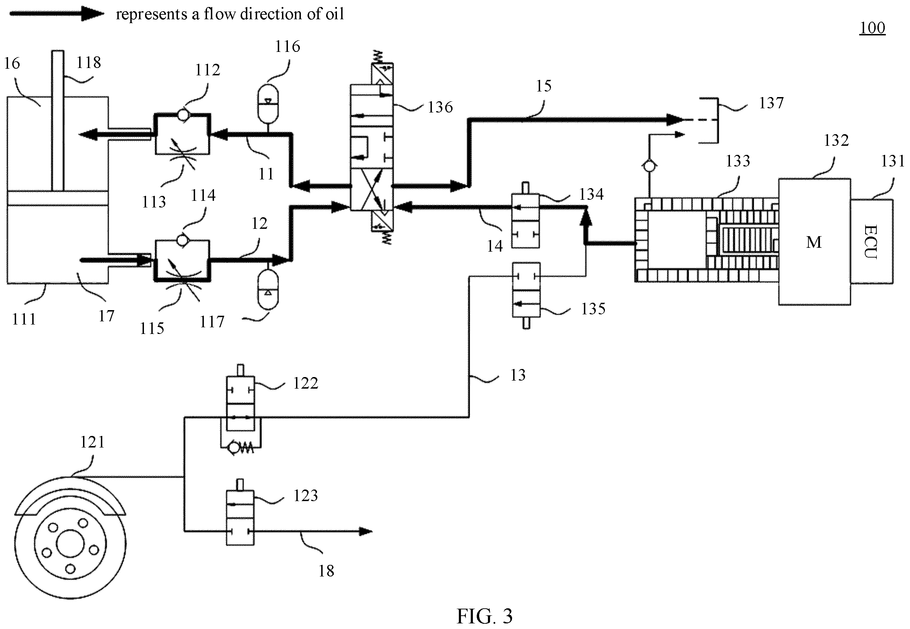

FIG. 3 is a schematic diagram of an oil flow path in a lowering process (a second adjustment mode) of a suspension system 110 according to an embodiment of this invention. As shown in FIG. 3, a main controller 131 determines, based on a monitoring result or a system requirement, to switch a suspension apparatus 110 to the second adjustment mode. Specifically, the main controller 131 controls a booster motor 132 to drive a booster pump assembly 133 to build up pressure, and at the same time controls a first bypass valve 134 to switch on and a second bypass valve 135 to switch off. High-pressure oil flows out from an outlet of the booster pump assembly 133 and flows to a control valve 136 through a fourth hydraulic pipeline 14. The main controller 131 controls an outlet and an inlet of the control valve 136, so that the high-pressure oil flows from the control valve 136 to a first hydraulic chamber 16 of a suspension support assembly 111 through a first hydraulic pipeline 11. Oil in a second hydraulic chamber 17 flows to the control valve 136 through a second hydraulic pipeline 12, and flows to an oil storage cylinder 137 through a fifth hydraulic pipeline 15. In this case, pressure in the first hydraulic chamber 16 increases, pressure in the second hydraulic chamber 17 decreases, and a piston push rod 118 drops under an effect of a pressure difference.

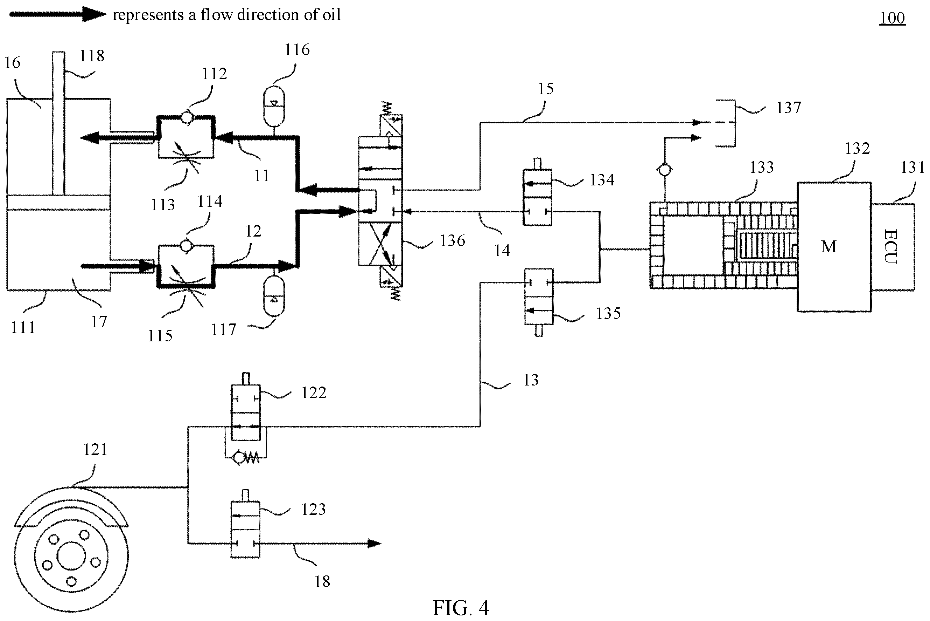

FIG. 4 is a schematic diagram of an oil flow path in a compression process in which a suspension apparatus 110 performs damping adjustment according to an embodiment of this invention. As shown in FIG. 4, a main controller 131 determines, based on a monitoring result or a system requirement, to perform damping adjustment on a vehicle through the suspension apparatus 110. For example, in a normal traveling process of the vehicle, a vehicle height is generally fixed, and damping control needs to be performed on the vehicle to attenuate an impact of a road surface. For example, the main controller 131 controls a booster pump assembly 133 not to build up pressure, and controls a first bypass valve 134 and a second bypass valve 135 to switch off. When a control valve 136 is a three-position two-way valve, the control valve 136 is located in the middle. FIG. 4 is a schematic diagram of an oil flow path in a rising process in which a piston push rod 118 performs damping adjustment. In this case, oil in a second hydraulic chamber 17 flows to the control valve 136 through a second hydraulic pipeline 12, and flows to a first hydraulic chamber 16 through the control valve 136 and a first hydraulic pipeline 11. In this case, because a second one-way valve 114 only allows the oil to flow from the second hydraulic pipeline 12 to the second hydraulic chamber 17, oil in the second hydraulic pipeline 12 needs to flow through a second flow valve 115. The main controller 131 controls a value of damping in an entire suspension hydraulic circuit through the second flow valve 115, and at the same time an accumulator 117 is configured to quickly adjust oil pressure in the first hydraulic chamber 16 and oil pressure in the second hydraulic chamber 17.

Similarly, when the piston push rod 118 drops, oil in the first hydraulic chamber 16 flows to the control valve 136 through a first hydraulic pipeline 11, and flows to the second hydraulic chamber 17 through the control valve 136 and the second hydraulic pipeline 12 (not shown in FIG. 4). In this case, because a first one-way valve 114 allows the oil to flow only from the first hydraulic pipeline 11 to the first hydraulic chamber 16, oil in the first hydraulic pipeline 11 needs to flow through a first flow valve 114. The main controller 131 controls the value of damping in the entire suspension hydraulic circuit through the first flow valve 114, and at the same time an accumulator 116 is configured to quickly adjust the oil pressure in the first hydraulic chamber 16 and the oil pressure in the second hydraulic chamber 17.

It should be understood that, in the lifting or lowering process (the first adjustment mode or the second adjustment mode), the suspension apparatus 110 may synchronously perform damping adjustment to attenuate the impact of the road surface in the lifting or lowering process.

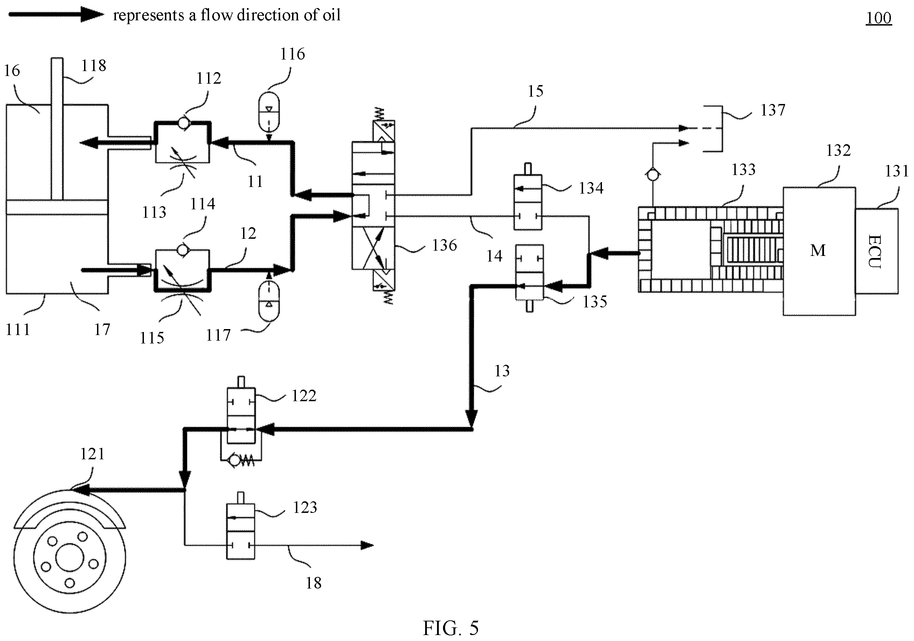

FIG. 5 is a schematic diagram of an oil flow path in a pressure build-up process of a braking apparatus and a damping adjustment process according to an embodiment of this invention. As shown in FIG. 5, a main controller 131 determines, based on a monitoring result or a system requirement, to apply a braking force to a wheel through the braking apparatus 120, and at the same time performs damping adjustment through a suspension apparatus 110. For example, a driver sends a braking instruction, and the main controller 131 controls the braking apparatus 120 to perform braking. At the same time, when a vehicle travels normally, a vehicle height is generally fixed. However, when the vehicle performs braking, a vehicle body tilts. To reduce the tilt of the vehicle body in a braking process, damping control is performed on the vehicle to offset axle load transfer in the braking process. For example, the main controller 131 controls a booster motor 132 to drive a booster pump assembly 133 to build up pressure, and at the same time controls a first bypass valve 134 to switch off and a second bypass valve 135 to switch on. High-pressure oil flows out from an outlet of the booster pump assembly 133 and flows to a brake disc 121 through a third hydraulic pipeline 13. In a braking pressure build-up process, the main controller 131 controls an ABS proportional valve 122 to switch on and a pressure reducing valve 123 to switch off; in a braking pressure maintaining process, the main controller 131 controls the ABS proportional valve 122 to switch off and the pressure reducing valve 123 to switch off; and in a braking pressure reducing process, the main controller 131 controls the ABS proportional valve 122 to switch off and the pressure reducing valve 123 to switch on.

At the same time, the main controller 131 controls a controller 136 to be located in a middle position, and controls a first flow valve 113 and a second flow valve 115 to adjust damping in a timely manner. A specific adjustment process is similar to the damping adjustment process shown in FIG. 4. Details are not described again in this invention.

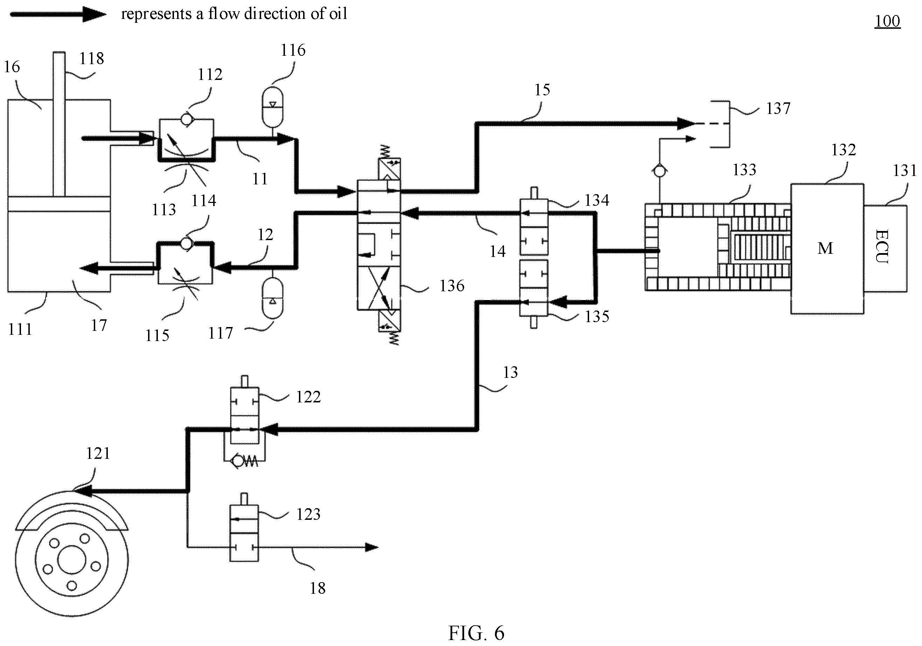

FIG. 6 is a schematic diagram of an oil flow path when both lifting of a suspension apparatus and pressure build-up for a braking apparatus are performed according to an embodiment of this invention. As shown in FIG. 6, a main controller 131 determines, based on a monitoring result or a system requirement, to adjust a posture of a vehicle through the suspension apparatus 110, and applies a braking force to a wheel through the braking apparatus 120. For example, the main controller 131 controls a booster motor 132 to drive a booster pump assembly 133 to build up pressure, and at the same time controls a first bypass valve 134 and a second bypass valve 135 to switch on. High-pressure oil flows out from an outlet of the booster pump assembly 133, and flows to the suspension apparatus 110 and the braking apparatus 120 through a fourth hydraulic pipeline 14 and a third hydraulic pipeline 13 respectively. A process in which the suspension apparatus 110 adjusts the posture of the vehicle is similar to the processes shown in FIG. 2 and FIG. 3, and a process in which the braking apparatus 120 performs braking is similar to the process shown in FIG. 5. Details are not described herein again in this application.

It should be understood that, in a lifting (or lowering) process of the suspension apparatus 110 and a pressure build-up process of the braking apparatus 120, damping adjustment may be further performed to attenuate an impact of a road surface in the lifting (or lowering) process or the braking process.

Therefore, according to the suspension and hydraulic integrated system provided in embodiments of this invention, the suspension system and the braking system reuse the same actuator system, so that a quantity of actuator assemblies of an entire vehicle can be reduced, and costs are significantly reduced. In addition, after the suspension system and the braking system are integrated, a quantity of hydraulic pipelines is reduced, an arrangement of the braking system and the suspension system is facilitated, and space of a chassis is saved. In addition, only one controller may be disposed in the integrated system. This is beneficial to vertical, longitudinal, and horizontal integrated control of the vehicle and improves dynamic performance of the vehicle.

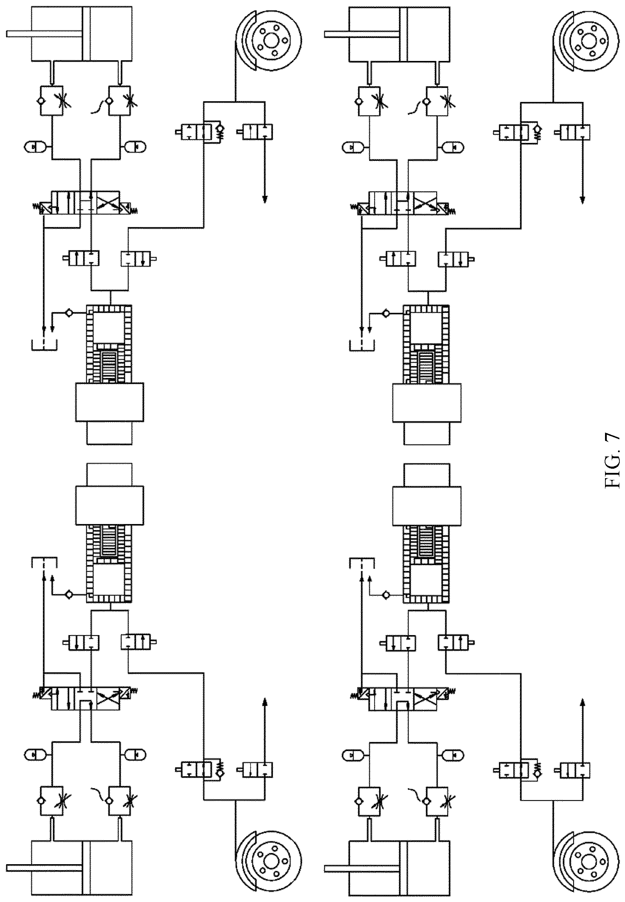

FIG. 7 is a schematic diagram of an arrangement solution of a suspension and braking integrated system of a vehicle according to an embodiment of this invention. In the solution shown in FIG. 7, four wheels of the vehicle respectively use four actuator assembly assemblies, and the four actuator assembly assemblies respectively control suspension and braking systems of four angle assemblies.

Therefore, in the arrangement solution of the suspension and braking integrated system provided in embodiments of this invention, one actuator assembly is disposed for a suspension and braking system of each wheel, and each actuator assembly may be further configured as a backup actuator assembly for a suspension and braking system of another wheel. Therefore, high security can be ensured.

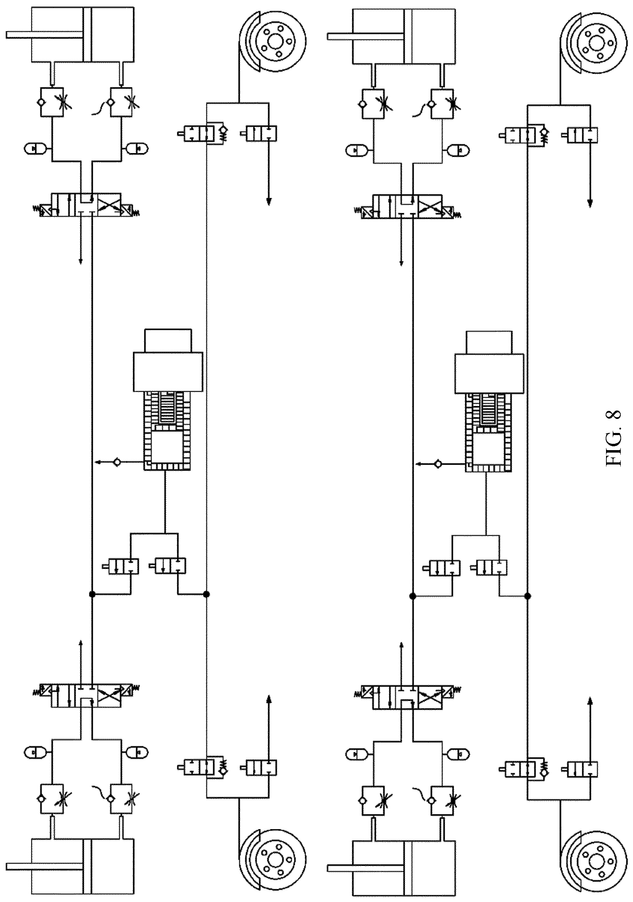

FIG. 8 is a schematic diagram of another arrangement solution of a suspension and braking integrated system of a vehicle according to an embodiment of this invention. In the solution shown in FIG. 8, two actuator assemblies are configured to implement suspension and braking integrated control of four angle assemblies. For example, suspension and braking integrated systems of a left front wheel and a right front wheel share a same actuator assembly, and suspension and braking integrated systems of a left rear wheel and a right rear wheel share a same actuator assembly.

Therefore, in the arrangement solution of the suspension and braking integrated system provided in embodiments of this invention, suspension and braking systems of every two wheels share one actuator assembly, and the two actuator assemblies may further be backups for each other. This reduces a quantity of actuator assemblies, improves a utilization rate of the actuator assembly, and ensures sufficient security.

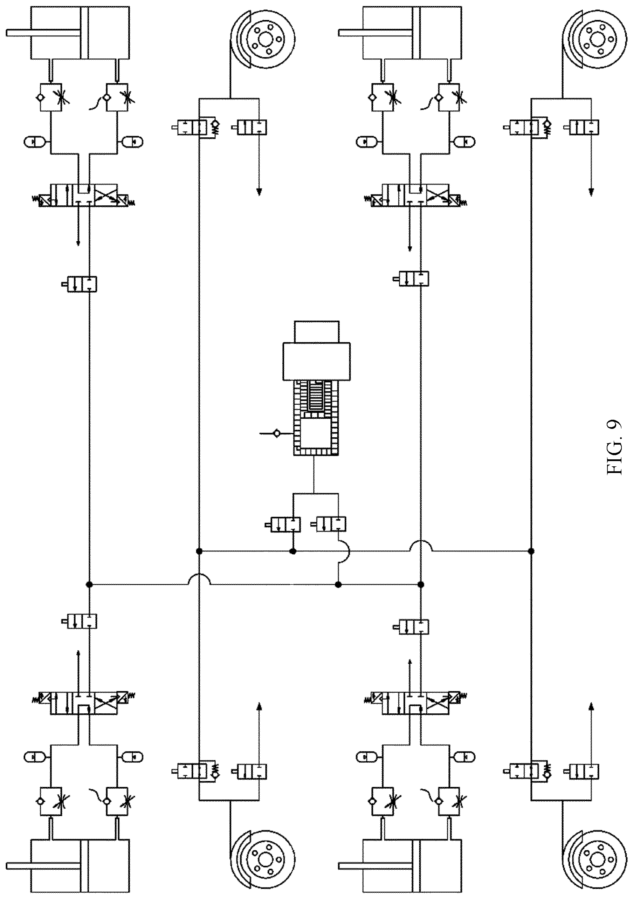

FIG. 9 is a schematic diagram of still another arrangement solution of a suspension and braking integrated system of a vehicle according to an embodiment of this invention. In the solution shown in FIG. 9, pressure boost is performed on four angles by using a general actuator machine, that is, suspension and braking integrated systems of all wheels use a same actuator assembly.

Therefore, in the arrangement solution of the suspension and braking integrated system provided in embodiments of this invention, a set of actuator assemblies is disposed to provide power for the suspension and braking integrated systems of all wheels. This can effectively save space and improve a utilization rate of the actuator assembly.

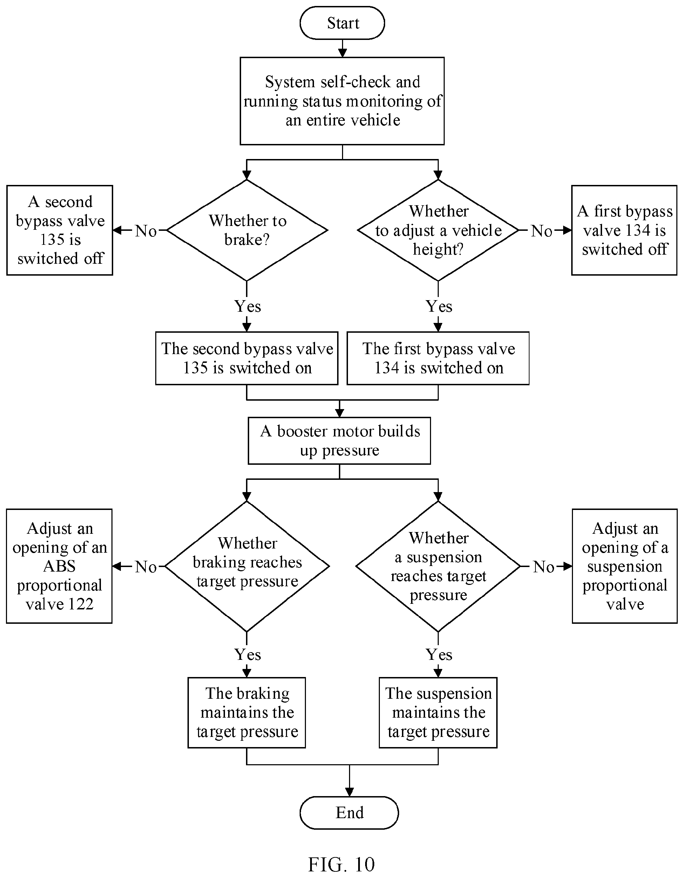

FIG. 10 is a flowchart of a suspension and braking integrated control method according to an embodiment of this application. As shown in FIG. 10, a suspension and braking integrated system provided in embodiments of this invention is used to adjust a vehicle body posture and perform braking control. First, self-check and status monitoring of an entire vehicle are performed, a running status of the vehicle is determined, and self-check on functions of a suspension apparatus and a braking apparatus is performed.

Then, a braking process and use of a height adjustment function are determined, and whether the system needs braking pressure build-up and suspension height adjustment is checked. When the system requires height adjustment, a main controller 131 controls a first bypass valve 134 to switch on; when the system requires braking, the main controller 131 controls a second bypass valve 135 to switch on; and when the system requires both height adjustment and braking, the main controller 131 controls the first bypass valve 134 and the second bypass valve 135 to switch on.

Further, the main controller 131 controls a booster motor 132 to drive a booster pump assembly 133 to build up pressure, and at the same time monitors whether pressure of the suspension apparatus 110 and pressure of the braking apparatus 120 reach target values. When the pressure of the suspension apparatus 110 does not reach the target value, an opening (not shown in the figure) of a suspension proportional valve is adjusted to further adjust the pressure. When the pressure of the suspension apparatus 110 reaches the target value, the suspension apparatus 110 is controlled to maintain target pressure. For example, fine adjustment may be performed on suspension pressure through a first flow valve 113 or a second flow valve 115, so that the pressure of the suspension apparatus 110 may be maintained within an allowable error range of the target pressure. Similarly, when the pressure of the braking apparatus 120 does not reach the target value, an opening of an ABS proportional valve 122 is adjusted to further adjust the pressure; and when the pressure of the braking apparatus 120 reaches the target value, the braking apparatus 120 is controlled to maintain the target pressure. For example, fine adjustment may be performed on a braking circuit by controlling the ABS proportional valve 122 and a pressure reducing valve 123, so that the pressure of the braking apparatus 120 may be maintained within an allowable range of the target pressure.

After the pressure is adjusted, a booster motor based on target braking pressure or vehicle body target high-speed information is further controlled until a target instruction is completed.

## Claims

1. A suspension and braking integrated system of a vehicle, comprising:
a suspension apparatus (110), configured to adjust a posture of the vehicle and controlled by hydraulic pressure;
a braking apparatus (120), configured to provide a braking force for a wheel of the vehicle and controlled by hydraulic pressure;
an actuator assembly (130), configured to supply hydraulic pressure to the suspension apparatus (110) and the braking apparatus (120); and
a control valve (136), wherein the control valve (136) supplies hydraulic pressure to the suspension apparatus (110) through a suspension hydraulic circuit,
wherein the control valve (136) is configured to adjust a flow direction of oil in the suspension hydraulic circuit, to control the suspension apparatus (110) to switch between a first adjustment mode and a second adjustment mode,
wherein the suspension apparatus (110) is specifically configured to raise a vehicle body height of the vehicle in the first adjustment mode and reduce the vehicle body height of the vehicle in the second adjustment mode.
wherein the suspension apparatus (110) comprises a damper support assembly (111), and the damper support assembly (111) comprises a first hydraulic chamber (16) and a second hydraulic chamber (17); **characterized in that** the suspension hydraulic circuit includes a first hydraulic pipeline (11) and a second hydraulic pipeline (12), the first hydraulic pipeline (11) is connected to the first hydraulic chamber (16), and the second hydraulic pipeline (12) is connected to the second hydraulic chamber (17), and
the control valve (136) is specifically configured to: adjust pressure of oil in the first hydraulic chamber (16) to be less than pressure of oil in the second hydraulic chamber (17), to control the suspension apparatus (110) to switch to the first adjustment mode; and
adjust the pressure in the first hydraulic chamber (16) to be greater than the pressure in the second hydraulic chamber (17), to control the suspension apparatus (110) to switch to the second adjustment mode.

2. The system according to claim 1, wherein the control valve (136) is a three-position two-way valve.

3. The system according to any one of claims 1 to 2, wherein the system further comprises a third hydraulic pipeline (13) and a fourth hydraulic pipeline (14), the actuator assembly (130) supplies hydraulic pressure to the braking apparatus (120) through the third hydraulic pipeline (13), and the actuator assembly (130) supplies hydraulic pressure to the suspension apparatus (110) through the fourth hydraulic pipeline (14).

4. The system according to claim 3, wherein the actuator assembly (130) further comprises a flow divider, and the flow divider is configured to control respective flow volumes of oil in the third hydraulic pipeline (13) and the fourth hydraulic pipeline (14) and/or a flow ratio of oil in the two hydraulic pipelines.

5. The system according to claim 3 or 4, wherein the system further comprises a first bypass valve (134) and a second bypass valve (135), the first bypass valve (134) is disposed on the fourth hydraulic pipeline (14) to control connection and disconnection of the fourth hydraulic pipeline (14), and the second bypass valve (135) is disposed on the third hydraulic pipeline (13) to control connection and disconnection of the third hydraulic pipeline (13).

6. The system according to any one of claims 1 to 5, wherein the suspension apparatus (110) further comprises a flow valve, the flow valve is disposed on the suspension hydraulic circuit, and the flow valve is configured to perform damping adjustment.

7. A vehicle, comprising the system according to any one of claims 1 to 6.

## Patentansprüche

1. Integriertes Aufhängungs- und Bremssystem eines Fahrzeugs, umfassend:
eine Aufhängungsvorrichtung (110), die dazu konfiguriert ist, eine Lage des Fahrzeugs einzustellen, und die durch Hydraulikdruck gesteuert wird;
eine Bremsvorrichtung (120), die dazu konfiguriert ist, eine Bremskraft für ein Rad des Fahrzeugs bereitzustellen, und die durch Hydraulikdruck gesteuert wird;
eine Aktuatorbaugruppe (130), die dazu konfiguriert ist, der Aufhängungsvorrichtung (110) und der Bremsvorrichtung (120) Hydraulikdruck zuzuführen; und
ein Steuerventil (136), wobei das Steuerventil (136) der Aufhängungsvorrichtung (110) über einen Hydraulikkreis der Aufhängung Hydraulikdruck zuführt,
wobei das Steuerventil (136) dazu konfiguriert ist, eine Strömungsrichtung von Öl in dem hydraulischen Aufhängungskreis einzustellen, um die Aufhängungsvorrichtung (110) so zu steuern, dass sie zwischen einem ersten Einstellmodus und einem zweiten Einstellmodus umschaltet,
wobei die Aufhängungsvorrichtung (110) speziell dazu konfiguriert ist, in dem ersten Einstellmodus eine Fahrzeugkarosseriehöhe des Fahrzeugs anzuheben und in dem zweiten Einstellmodus die Fahrzeugkarosseriehöhe des Fahrzeugs zu verringern,
wobei die Aufhängungsvorrichtung (110) eine Dämpferstützbaugruppe (111) umfasst, und die Dämpferstützbaugruppe (111) eine erste Hydraulikkammer (16) und eine zweite Hydraulikkammer (17) umfasst;
**dadurch gekennzeichnet, dass** der Hydraulikkreis der Aufhängung eine erste hydraulische Rohrleitung (11) und eine zweite hydraulische Rohrleitung (12) beinhaltet, wobei die erste hydraulische Rohrleitung (11) mit der ersten Hydraulikkammer (16) verbunden ist und die zweite hydraulische Rohrleitung (12) mit der zweiten Hydraulikkammer (17) verbunden ist, und
das Steuerventil (136) speziell dazu konfiguriert ist: den Öldruck in der ersten Hydraulikkammer (16) so einzustellen, dass er niedriger als der Öldruck in der zweiten Hydraulikkammer (17) ist, um die Aufhängungsvorrichtung (110) so zu steuern, dass sie in den ersten Einstellmodus umschaltet; und
den Druck in der ersten Hydraulikkammer (16) so einzustellen, dass er größer als der Druck in der zweiten Hydraulikkammer (17) ist, um die Aufhängungsvorrichtung (110) so zu steuern, dass sie in den zweiten Einstellmodus umschaltet.

2. System nach Anspruch 1, wobei das Steuerventil (136) ein Dreistellungs-Zweiwegeventil ist.

3. System nach einem der Ansprüche 1 bis 2, wobei das System ferner eine dritte hydraulische Rohrleitung (13) und eine vierte hydraulische Rohrleitung (14) umfasst, die Aktuatorbaugruppe (130) der Bremsvorrichtung (120) Hydraulikdruck über die dritte hydraulische Rohrleitung (13) zuführt und die Aktuatorbaugruppe (130) der Aufhängungsvorrichtung (110) Hydraulikdruck über die vierte hydraulische Rohrleitung (14) zuführt.

4. System nach Anspruch 3, wobei die Aktuatorbaugruppe (130) ferner einen Strömungsteiler umfasst, und der Strömungsteiler dazu konfiguriert ist, jeweilige Strömungsvolumina von Öl in der dritten hydraulischen Rohrleitung (13) und der vierten hydraulischen Rohrleitung (14) und/oder ein Strömungsverhältnis von Öl in den zwei hydraulischen Rohrleitungen zu steuern.

5. System nach Anspruch 3 oder 4, wobei das System ferner ein erstes Bypassventil (134) und ein zweites Bypassventil (135) umfasst, das erste Bypassventil (134) an der vierten hydraulischen Rohrleitung (14) angeordnet ist, um eine Verbindung und Trennung der vierten hydraulischen Rohrleitung (14) zu steuern, und das zweite Bypassventil (135) an der dritten hydraulischen Rohrleitung (13) angeordnet ist, um eine Verbindung und Trennung der dritten hydraulischen Rohrleitung (13) zu steuern.

6. System nach einem der Ansprüche 1 bis 5, wobei die Aufhängungsvorrichtung (110) ferner ein Durchflussventil umfasst, das Durchflussventil auf dem Hydraulikkreis der Aufhängung angeordnet ist und das Durchflussventil dazu konfiguriert ist, eine Dämpfungseinstellung durchzuführen.

7. Fahrzeug, umfassend das System nach einem der Ansprüche 1 bis 6.

## Revendications

1. Système intégré de suspension et de freinage d'un véhicule, comprenant :
un appareil de suspension (110), configuré pour régler une posture du véhicule et commandé par une pression hydraulique ;
un appareil de freinage (120), configuré pour fournir une force de freinage pour une roue du véhicule et commandé par une pression hydraulique ;
un ensemble actionneur (130), configuré pour fournir une pression hydraulique à l'appareil de suspension (110) et à l'appareil de freinage (120) ; et
une vanne de commande (136), dans lequel la vanne de commande (136) fournit une pression hydraulique à l'appareil de suspension (110) par l'intermédiaire d'un circuit hydraulique de suspension,
dans lequel la vanne de commande (136) est configurée pour régler une direction d'écoulement d'huile dans le circuit hydraulique de suspension, pour commander l'appareil de suspension (110) pour basculer entre un premier mode de réglage et un second mode de réglage,
dans lequel l'appareil de suspension (110) est spécifiquement configuré pour augmenter la hauteur de la carrosserie du véhicule dans le premier mode de réglage et réduire la hauteur de la carrosserie du véhicule dans le second mode de réglage.
dans lequel l'appareil de suspension (110) comprend un ensemble de support d'amortisseur (111), et l'ensemble de support d'amortisseur (111) comprend une première chambre hydraulique (16) et une seconde chambre hydraulique (17) ; **caractérisé en ce que**
le circuit hydraulique de suspension comporte une première canalisation hydraulique (11) et une deuxième canalisation hydraulique (12), la première canalisation hydraulique (11) est connectée à la première chambre hydraulique (16), et la deuxième canalisation hydraulique (12) est connectée à la seconde chambre hydraulique (17), et
la vanne de commande (136) est spécifiquement configurée pour : régler la pression de l'huile dans la première chambre hydraulique (16) pour qu'elle soit inférieure à la pression de l'huile dans la seconde chambre hydraulique (17), pour commander à l'appareil de suspension (110) de passer au premier mode de réglage ; et
régler la pression dans la première chambre hydraulique (16) pour qu'elle soit supérieure à la pression dans la seconde chambre hydraulique (17), pour commander à l'appareil de suspension (110) de passer au second mode de réglage.

2. Système selon la revendication 1, dans lequel la vanne de commande (136) est une vanne à deux voies à trois positions.

3. Système selon l'une quelconque des revendications 1 et 2, dans lequel le système comprend également une troisième canalisation hydraulique (13) et une quatrième canalisation hydraulique (14), l'ensemble actionneur (130) fournit une pression hydraulique à l'appareil de freinage (120) par l'intermédiaire de la troisième canalisation hydraulique (13), et l'ensemble actionneur (130) fournit une pression hydraulique à l'appareil de suspension (110) par l'intermédiaire de la quatrième canalisation hydraulique (14).

4. Système selon la revendication 3, dans lequel l'ensemble actionneur (130) comprend également un diviseur de flux, et le diviseur de flux est configuré pour commander les volumes de flux respectifs d'huile dans la troisième conduite hydraulique (13) et la quatrième conduite hydraulique (14) et/ou un rapport de flux d'huile dans les deux conduites hydrauliques.

5. Système selon la revendication 3 ou 4, dans lequel le système comprend également une première vanne de dérivation (134) et une seconde vanne de dérivation (135), la première vanne de dérivation (134) est disposée sur la quatrième conduite hydraulique (14) pour commander la connexion et la déconnexion de la quatrième conduite hydraulique (14), et la seconde vanne de dérivation (135) est disposée sur la troisième conduite hydraulique (13) pour commander la connexion et la déconnexionde la troisième conduite hydraulique (13).

6. Système selon l'une quelconque des revendications 1 à 5, dans lequel l'appareil de suspension (110) comprend également une vanne de flux, la vanne de flux est disposée sur le circuit hydraulique de suspension, et la vanne de flux est configurée pour réaliser un réglage d'amortissement.

7. Véhicule, comprenant le système selon l'une quelconque des revendications 1 à 6.
